# EUROPEAN PATENT SPECIFICATION

(11) **EP 0 439 941 B1**
(45) Date of publication and mention of the grant of the patent: **29.01.1997**
(21) Application number: 90313801.4
(22) Date of filing: 18.12.1990
(51) Int. Cl.: C09J 7/02, C09J 133/04

(54) **Aqueous, repositionable, high peel strength pressure sensitive adhesives**
Wässrige, repositionierbare, druckempfindliche Klebemittel mit hoher Haftung
Adhésifs aqueux sensibles à la pression, repositionnables et à forte adhésion

(30) Priority: 22.01.1990 US 467964
(43) Date of publication of application: 07.08.1991
(73) Proprietor: MINNESOTA MINING AND MANUFACTURING COMPANY, St. Paul, Minnesota 55133-3427 (US)
(72) Inventor: Bohnel, Bernd, c/o Minnesota Mining and, St. Paul, Minnesota 55133-3427 (US); Schlosser, Daniel L., c/o Minnesota Mining and, St. Paul, Minnesota 55133-3427 (US)
(74) Representative: Baillie, Iain Cameron

(56) References cited:
- DE-A- 3 537 433
- FR-A- 2 224 536

## Description

### Technical Field

The invention relates to aqueous pressure sensitive adhesive compositions. More specifically, the adhesive compositions are comprised of a concentrate of tacky, infusible, solid, elastomeric polymeric microspheres and an acrylic latex pressure sensitive adhesive, the compositions affording coatings having a unique balance of desired adhesion characteristics, namely superior pressure-sensitive tack with repositionability, even after prolonged aging in situ.

### Background Art

During the past decade, Post-it™ notes and related products, commercially available from the 3M Company, have become virtually indispensible consumer and business office items. The commercial success of these products is attributed to their superb repositionability, resulting from the use of an adhesive in the form of infusible, tacky, solid elastomeric polymeric microspheres. U.S. Patent Nos. 3,691,140 and 4,166,152 describe techniques for the manufacture of such microsphere adhesives.

U.S. Patent No. 3,857,731 discloses sheet materials coated with a composition comprising the aforementioned microsphere adhesive together with a binder material, one example thereof being a conventional acrylate pressure sensitive adhesive, taught to provide a mechanical socket wherein the individual microspheres are anchored. This is taught to prevent adhesive transfer, i.e., the phenomenon wherein the adhesive microspheres are undesirably transferred to an adherend from the original coated substrate. High peel strengths have not been available with the system disclosed therein, the adhesive characteristics stemming from the tacky but low peel strength microspheres.

While aqueous systems are contemplated by this patent, the available coating weight of such a system is hindered by the lack of sufficiently high concentration of the microsphere adhesive used therein. This limitation on coating weight plus the added detriment of elevated surfactant concentration limits the available peel adhesion of aqueous adhesive systems disclosed therein.

While the foregoing adhesives and adhesive systems have provided products which are highly novel in terms of functionality and have received widespread commercial success, the inherently low peel strength of products utilizing the microsphere adhesive has rendered them unsuitable for many applications wherein secure bonding is desired, e.g., for office, graphic art and packaging tapes and labels. Such products traditionally make use of conventional film-forming high peel strength pressure sensitive adhesives (PSA's) which will adhere securely, however, which also will undesirably form a permanent bond with the adherend and will not be removable subsequent to application.

U.S. Patent No. 4,735,837 discloses adhesive sheets assertedly with adhesion capability which does not decline from frequent repetition of bonding to and removing from various adherends. The adhesive composition is taught to comprise elastic micro-balls which are completely covered with an adhesive layer but which partially protrude from the surface thereof. Because solvent-based systems are contemplated in this patent, it is thought that any repositionable characteristics will be severely reduced upon aging in situ, i.e., the bond strength would rapidly increase.

The adhesive composition of our invention overcomes the limitations described above, providing an aqueous adhesive system, which when coated onto a substrate, provides the desired balance of adhesion characteristics, namely, superior peel strength as well as repositionability, over extended periods of time.

### Summary of the Invention

The invention comprises a method of preparing an aqueous adhesive composition comprising the steps of:
(a) forming an aqueous suspension of solid, tacky, elastomeric, infusible, polymeric microspheres, said suspension including surfactants and/or suspension stabilisers employed in forming said microspheres;
(b) removing a portion of the surfactants and/or suspension stabilisers from said aqueous suspension to limit the adhesion-reducing effect thereof on the adhesive composition; and
(c) admixing the aqueous suspension resulting from step (b) with an acrylic latex pressure sensitive adhesive, the ratio, on a solids basis, of said microspheres to said latex being from about 2.5 to 1 to about 10 to 1.

The invention also comprises an aqueous adhesive composition comprising an admixture of:
(a) an aqueous suspension of solid, tacky, elastomeric, infusible, polymeric microspheres which has been concentrated by removal of a portion of the surfactants and/or suspension stabilisers contained in the suspension in an amount to limit the adhesion-reducing effect thereof on the final composition, and
(b) an acrylic latex pressure sensitive adhesive, the ratio, on a solids basis, of said microspheres to said latex being from 2.5 to 1 to 10 to 1,
said adhesive composition having a peel adhesion value of at least 200 grams per 1.9 cm after said adhesive composition has been applied to an adherent.

The adhesives of the invention are extremely useful for the preparation of products such as office, graphic art and packaging tapes as well as labels for various uses. The resulting products will adhere very securely to a variety of substrates, even when applied around severe curves and corners. On demand, however, they can be readily removed from the adherents without delamination or adhesive transfer, i.e., the transfer of an adhesive residue to a specific adherent.

### Detailed Description

The polymeric microsphere concentrate useful in our invention can be obtained by aqueous suspension polymerization techniques disclosed in the aforementioned U.S. Patent Nos. 3,691,140 and 4,166,152. The suspension polymerization process as disclosed therein normally results in an aqueous microsphere adhesive having a solids content of about 25% (non-volatile solids content by weight). Upon standing, the aqueous suspension products will separate into two phases, one being the mother liquid which is substantially free of microspheres, the other being a concentrate containing suspended solid, infusible and tacky microspheres therein. Upon removal of the mother liquid by decantation or otherwise, a microsphere concentrate having a solids content on the order of 70%, and comprising a highly packed suspension of separate microspheres, is provided.

Importantly, this convenient concentration procedure provides for the removal of about 65% of the total respective surfactants and/or suspension stabilizers employed in the suspension process, same having been partitioned in the aqueous mother liquid. The removal of such surfactants and suspension stabilizers is required for the aqueous adhesives of the invention to exhibit the requisite adhesion characteristics of our composition, as their presence reduces peel adhesion of the adhesive.

The acrylic latex pressure sensitive adhesives useful in the present invention are those typically employed for permanent bonding tapes, and are typically comprised of aqueous emulsions of acrylic copolymers having a solids content of about 50%, which are normally stabilized with surfactants compatible with those used in the microsphere preparation so as to avoid potential coagulation upon mixing. These acrylic copolymers are inherently tacky at ordinary temperatures, generally have glass transition temperatures below about -10°C, are film-forming and have excellent peel adhesion. Representative examples of suitable acrylic latex PSA's include "Rhoplex" N1031; commercially available from the Rohm and Haas Company; "Ucar" Latex 173, and "Ucar" Latex 174, both commercially available from the Union Carbide Corporation; and "Hycar" 2600-x222 and "Hycar" 26146, both available from the B. F. Goodrich Company.

Various other additives, such as pigments, fillers, etc. to provide specific coloration or other characteristics, may be included as long as they do not detract from the desired balance of adhesive properties.

Preparation of the aqueous adhesive composition of the invention consists of a simple admixture of the microsphere concentrate and the acrylic latex pressure sensitive adhesive, together with deionized water, if a downward adjustment of solids content is desired, the preferred solids content of the mixture being between about 30 and about 60% by weight. Below about 30 percent, an effective coating weight cannot be achieved, while the upper limit is simply a practical one for processing techniques. The microsphere concentrate and the acrylic latex PSA should be mixed so as to provide a dry polymer weight ratio of from about 10:1 to about 2.5:1, respectively, to form the adhesive composition. As this weight ratio is increased above about 10:1, a drastic reduction in the peel strength is noted. Conversely, if the same ratio is decreased below about 2.5:1, the desired adhesion property related to repositionability may be lost.

The adhesive compositions of the invention can be applied to many substrates, e.g., films and paper, by conventional means, e.g., knife, wire rod, rotogravure roll, etc. Generally, such techniques provide very uniform coatings if the wet coating thickness is maintained at about 1.0 to about 5.0 mils. At a thickness above this range, the coating quality may be compromised due to inherent limitations in the drying process. Such necessitates the use of an adhesive having a sufficiently high solids content to obtain dry coating weights of a desired level.

It has been found that the dry coating weight of the adhesive deposit should be at least about 1.0 gram per 72 square inches (1.0 gram per 465 square centimeters). Below that level, the desired combination of superior peel strength as well as repositionability may not be achieved. Preferably, the peel strength will be at least about 200 grams per 3/4 inch (200 grams per 1.9 cm) at this dry coating weight.

Where necessary, conventional primers can be conveniently utilized between the substrate and the adhesive coating. The art of priming substrates to allow wetting and/or bonding of an applied coating is well known.

The combination of adhesive properties, namely superior peel strength and repositionability, can be demonstrated by means of a peel adhesion test where the peel adhesion is the force required to remove a coated tape from a test surface measured at a specific angle and rate of removal. The test surfaces used as our standard for measurement of peel strength are Polyester OR 86092 and 696 White Multi-Purpose Paper, both commercially available from the 3M Company. Other commercially available polyesters and standard bond papers would function equally as well.

Repositionability is defined in terms of a combination of two peel adhesion parameters, one being that peel removal proceeds "cleanly" without delamination of the test surface and/or the tape, and the transfer of substantial amounts of adhesive to the test surface, the other being that the "clean" removal is maintained upon aging in situ, i.e., after the adhesive has resided on a test surface for a prolonged time.

Surprisingly, the novel composition provides a coating which is superbly repositionable at a rate of at least 12 inches per minute (30.5 cm per minute) immediately after application, as well as after the adhesive has resided on an adherend for at least one week at 120°F (49°C), at any achievable peel adhesion. At the same time, products utilizing the adhesive can be adhered and removed many times from the adherend without losing functionality, i.e., the product displays repeated reuseability.

It is theorized that the increased peel adhesion of the adhesive coatings of this invention over conventional microsphere adhesives is due in part to the substantial removal of the surfactants/suspension stabilizers from the aqueous microsphere adhesive in addition to their increased adhesive contact surface resulting from the interstitial areas of adjacent microspheres being filled with the acrylic PSA polymer. While the presence of this interstitial material dramatically enhances the peel adhesion of the coating, it does not detract from performance with regard to repositionability. It appears that within the ratios defined earlier, the relative amount of the interstitial material is insufficient to allow for an intimate contact with and permanent bonding to the adherent.

The surfactants and suspension stabilizers, typically necessary during the synthesis of the polymeric microspheres, have a peel adhesion reducing effect. This can be demonstrated by adding appropriate amounts of same to the novel adhesive compositions and testing of the corresponding peel adhesions. Specific examples of surfactants and a suspension stabilizer tested to illustrate such effect include sodium octoxynol-2 ethane sulfonate (commercially available from the Rohm and Haas Company as a 27-30% solids aqueous solution under the trade designation "Triton" X-200), a 27 to 30% aqueous solution of ammonium lauryl sulfate (commercially available from the Onyx Chemical Company under the trade designation "Maprofix" NH), polyoxyethylene (9) octyl phenylether (commercially available from the Rohm and Haas Company under the trade designation "Triton" X-100), ammonium salt of sulfated nonylphenoxypoly (ethyleneoxy) ethanol (commercially available from the GAF Corporation as a 30% aqueous solution under the trade desigation of "Alipal" EP-110), and ammonium polyacrylate (prepared from "Acrysol" ASE95, an about 18% aqueous solution, commercially available from the Rohm and Haas Company), respectively.

The following non-limiting examples are submitted to further exemplify and illustrate the invention. All parts are by weight unless otherwise designated.

### Example 1

This example illustrates a general method by which solid, infusible, inherently tacky, elastomeric, polymeric microspheres are prepared. To a 1 liter, 3-necked flask equipped with a thermometer, a reflux condenser, a mechanical stirrer and a gas inlet tube were charged 300 grams of deionized water, 100 grams of isooctyl acrylate, 2.5 grams of acrylic acid, 0.25 gram of "Lucidol" 98 (tradename for a 98% active benzoyl peroxide, commercially available from the Pennwalt Corporation) and 4.2 grams of "Maprofix" NH. Concentrated ammonium hydroxide was added until a pH of 7.0 was obtained. Agitation of the mixture was set at 500 revolutions per minute and the reaction mixture was purged with nitrogen. The stirring and nitrogen purge were maintained throughout the reaction period. The reaction mixture was allowed to stir at room temperature for 15 minutes and then was heated to 75°C to initiate the reaction. The reaction became exothermic after about 30 minutes, and after the exotherm had subsided, the batch was heated to 75°C for 12 hours. The reaction mixture was cooled to room temperature and filtered through a 16 mesh screen. The resulting suspension was found to contain about 25% in solids, with the average size of the polymeric microspheres being 40 microns.

### Example 2

This example illustrates the preparation of a microsphere concentrate. The material from Example 1 was allowed to stand in a separatory funnel for 16 hours. This resulted in the formation of two phases, where the upper phase was the microsphere concentrate and the lower phase was mother liquid. The mother liquid was drained off and discarded, affording a fluid microsphere concentrate containing about 70% solids.

### Example 3

This illustrates the methods by which the adhesives of this invention and coatings thereof are prepared and tested. To a container were charged 79 grams of the microsphere concentrate from Example 2, 43 grams of "Hycar" 2600-X222, and 28 grams of deionized water. This was agitated till homogeneity was reached. The resulting adhesive composition had a solids content of 50% and contained the microsphere polymer and the acrylic PSA polymer at a dry weight ratio of 2.5 to 1.

The adhesive was then coated onto X-95 Latex-Saturated Coating Base Paper, commercially available from the Wausau Paper Mills Company, which was primed with a zinc oxide-based primer by means of a knife coater at a coating orifice of 4 mils, and the adhesive allowed to dry at a temperature of about 160°F (71°C). The dry coating weight was about 1.5 grams per 72 square inches (1.5 grams per 465 square centimeters). The coated paper was cut to 3/4 inch (1.9 cm) by 6 inch (15.2 cm) samples, the 3/4 inch (1.9 cm) dimension being in the machine direction. These samples were then lengthwise adhered to Polyester OR 86092 and 696 White Multi-Purpose Paper by applying and rolling with two passes of a 4.5 pound (2 kg) roller. The laminated samples were then peeled at an angle of 90° from the polyester and the paper at a rate of 12 inches per minute (30.5 cm per minute), with adhesions recorded at 355 (polyester) and 405 grams (paper). Removal proceeded without delamination or adhesive transfer.

The same laminated samples were allowed to age for one week at a temperature of 120°F (49°C). After this, the adhesions were 413 grams (polyester) and 430 grams (paper). Again, removal proceeded without delamination or adhesive transfer.

The reported adhesion values are an average of two readings. The above described methods and conditions are followed throughout.

To further illustrate repeated reuseability of the adhesive, nine additional adhesion tests were then performed using the same samples and adherends. The final adhesion values were 355 grams to both the polyester and paper. These repeated removals again did not result in delamination or adhesive transfer.

### Comparative Example 4

This example is to demonstrate the peel reduction effect of surfactants, specifically that of "Maprofix" NH. Thus, to the adhesive of Example 3 were added various amounts of "Maprofix" NH, and the corresponding coatings, coated again at an orifice of 4 mils, were tested for peel adhesion, recorded in TABLE 1.

**TABLE 1**

| "Maprofix" NH, dry weight % based on polymer | Peel Adhesion, Polyester, grams per 3/4 inch (grams per 1.9 cm) |
|---|---|
| 0.4 | 265 |
| 0.8 | 210 |
| 1.2 | 175 |

### Examples 5-8

These adhesive examples, all of which were prepared at a solids content of about 50% and coated at an orifice of 4 mils according to the method of Example 3, illustrate the use of various acrylic latex PSA's: "Hycar" 26146 (51% solids), "Rhoplex" N1031 (54% solids), "Ucar" Latex 173 (50% solids) and "Ucar" Latex 174 (50% solids). The ingredients used are summarized in TABLE 2.

**TABLE 2**

| Example | Acrylic Latex PSA | Microsphere Concentrate, grams | Deionized Water, grams |
|---|---|---|---|
| 5 | "Hycar" 26146, 24 grams | 89 | 36 |
| 6 | "Rhoplex" N1031, 26 grams | 101 | 30 |
| 7 | "Ucar" Latex 173, 50 grams | 77 | 31 |
| 8 | "Ucar" Latex 174, 43 grams | 77 | 31 |

The adhesion characteristics of Examples 5-8, coated at an orifice of 4 mils, are listed in TABLE 3.

**TABLE 3**

| | | Peel Adhesion, grams per 3/4 inch (grams per 1.9 cm) | | |
|---|---|---|---|---|
| Example | Polyester | Paper | Aged Bond, Polyester | Aged Bond, Paper |
| 5 | 310 | 362 | 312 | 350 |
| 6 | 220 | 260 | 355 | 282 |
| 7 | 302 | 277 | 357 | 475 |
| 8 | 377 | 362 | 387 | 525 |

All of the above peel removals proceeded without delamination or adhesive transfer.

### Example 9

This example illustrates how the peel adhesion of the adhesive of Example 3 is influenced by the dry coating weight thereof.

**TABLE 4**

| Dry Coating Weight, grams per 72 square inch (grams per 465 square cm) | Peel Adhesions, grams per 3/4 inch (grams per 19. cm) | |
|---|---|---|
| | Polyester | Paper |
| 0.7 | 176 | 192 |
| 0.9 | 215 | 225 |
| 1.4 | 315 | 340 |
| 1.6 | 342 | 395 |
| 1.8 | 380 | 480 |
| 2.4 | 415 | 635 |

### Comparative Example 10

This example illustrates the peel adhesion of the raw microsphere concentrate of Example 2 as a function of the coating weight.

**TABLE 5**

| Dry Coating Weight, grams per 72 square inch (grams per 465 square cm) | Peel Adhesion, grams per 3/4 inch (grams per 1.9 cm) | |
|---|---|---|
| | Polyester | Paper |
| 0.4 | 139 | 122 |
| 0.8 | 150 | 150 |
| 1.0 | 170 | 190 |
| 1.4 | 193 | 210 |
| 2.4 | 228 | 290 |
| 3.0 | 258 | 328 |

### Examples 11-15

These examples illustrate the effect of the weight ratio of the microsphere polymer to the acrylic PSA polymer on peel adhesion and repositionability. Adhesive compositions, analogous to Example 8, at various polymer weight ratios, were prepared and coated at an orifice of 4 mils. The adhesion of fresh and aged samples was then tested, reported in TABLE 6.

**TABLE 6**

| | | | Peel Adhesion, grams per 3/4 inch (grams per 1.9 cm) | | |
|---|---|---|---|---|---|
| Ex. | Polymer:Microsphere Weight Ratio | Polyester | Paper | Aged Bond, Polyester | Aged Bond, Paper |
| 11 | 10:1 | 220 | 245 | 222 | 332 |
| 12 | 5:1 | 220 | 252 | 212 | 380 |
| 8 | 2.5:1 | 377 | 362 | 387 | 525 |
| 13 | 1:1 | 385 | 355 | 417 | D |
| 14 | 1:5 | 510 | 420 | 670 | D |
| 15 | 1:10 | 535 | 447 | 687 | D |

All of the above peel removals proceeded without delamination and adhesive transfer, except those which are designated with a "D", meaning that delamination of the paper adherend had occurred.

### Comparative Example 16

An adhesive formulation was prepared by admixing 100 grams of the microsphere adhesive of Example 1 and 20.0 grams of "Hycar" 2600-X222. This adhesive, containing 30% solids, was coated at various coating weights, with 0.97 grams per 72 square inches (0.97 grams per 465 square cm) being the highest obtainable. The resulting coatings were tested for peel adhesion, reported in TABLE 7.

**TABLE 7**

| Dry Coating Weight, grams per 72 square inch (grams per 465 square cm) | Peel Adhesion, grams per 3/4 inch (grams per 1.9 cm) | |
|---|---|---|
| | Polyester | Paper |
| 0.38 | 106 | 143 |
| 0.62 | 158 | 173 |
| 0.76 | 170 | 218 |
| 0.97 | 190 | 225 |

### Comparative Examples 17-21

The data contained in TABLE 8 below is analogous to that of Comparative Example 4 and demonstrates the effect of various surfactants and a suspension stabilizer on several adhesives of the invention, with no addition thereof being the reference point.

**TABLE 8**

| Comparative Ex. | Surfactant or Suspension Stabilizer | Amount, % Based on Polymer | Adhesive Ex. | Acrylic Latex PSA | Peel Adhesion, Polyester, grams per 3/4 inch (grams per 1.9 cm) |
|---|---|---|---|---|---|
| 17 | "Maprofix" NH | 0 | 8 | "Ucar" Latex 174 | 352 |
| | "Maprofix" NH | 0.4 | 8 | "Ucar" Latex 174 | 195 |
| | "Maprofix" NH | 0.8 | 8 | "Ucar" Latex 174 | 180 |
| | "Maprofix" NH | 1.2 | 8 | "Ucar" Latex 174 | 160 |
| | | | | | |
| 18 | "Triton" X-200 | 0 | 3 | "Hycar" 2600-X222 | 360 |
| | "Triton" X-200 | 0.4 | 3 | "Hycar" 2600-X222 | 347 |
| | "Triton" X-200 | 0.8 | 3 | "Hycar" 2600-X222 | 272 |
| | "Triton" X-200 | 1.2 | 3 | "Hycar" 2600-X222 | 257 |
| | | | | | |
| 19 | "Alipal" EP-110 | 0 | 3 | "Hycar" 2600-X222 | 360 |
| | "Alipal" EP-110 | 0.4 | 3 | "Hycar" 2600-X222 | 330 |
| | "Alipal" EP-110 | 0.9 | 3 | "Hycar" 2600-X222 | 327 |
| | "Alipal" EP-110 | 1.3 | 3 | "Hycar" 2600-X222 | 310 |
| | | | | | |
| 20 | Ammonium salt of "Acrysol" ASE95 | 0 | 7 | "Ucar" Latex 173 | 302 |
| | Ammonium salt of "Acrysol" ASE95 | 0.5 | 7 | "Ucar" Latex 173 | 310 |
| | Ammonium salt of "Acrysol" ASE95 | 1.1 | 7 | "Ucar" Latex 173 | 272 |
| | Ammonium salt of "Acrysol" ASE95 | 1.6 | 7 | "Ucar" Latex 173 | 245 |
| | | | | | |
| 21 | Ammonium salt of "Acrysol" ASE95 | 0 | 3 | "Hycar" 2600-X222 | 342 |
| | Ammonium salt of "Acrysol" ASE95 | 0.5 | 3 | "Hycar" 2600-X222 | 287 |
| | Ammonium salt of "Acrysol" ASE95 | 1.1 | 3 | "Hycar" 2600-X222 | 208 |

## Claims

1. A method of preparing an aqueous adhesive composition comprising the steps of:
(a) forming an aqueous suspension of solid, tacky, elastomeric, infusible, polymeric microspheres, said suspension including surfactants and/or suspension stabilizers employed in forming said microspheres;
(b) removing a portion of the surfactants and/or suspension stabilizers from said aqueous suspension to limit the adhesion-reducing effect thereof on the adhesive composition; and
(c) admixing the aqueous suspension resulting from step (b) with an acrylic latex pressure sensitive adhesive, the ratio, on a solids basis, of said microspheres to said latex being from 2.5 to 1 to 10 to 1.

2. A method according to claim 1 wherein the aqueous suspension of step (a) has a non-volatile solids content of about 25%.

3. A method according to claim 1 wherein the surfactants and/or suspension stabilizers are removed by separating the aqueous suspension of step (a) into a first phase containing the surfactants and/or suspension stabilizers to be removed and a second phase.

4. A method according to claim 3 wherein the second phase comprises a concentrate of microspheres having a greater solids content than the aqueous suspension of step (a).

5. A method according to claim 4 wherein about 65% of the surfactants and/or suspension stabilizers in the aqueous suspension of step (a) are removed in step (b).

6. A method according to claim 1 wherein the aqueous adhesive composition has a non-volatile solids content of about 30% to about 60% by weight.

7. A method according to claim 1 wherein the aqueous adhesive composition has a peel adhesion of at least about 200 grams per 1.9 cm.

8. An aqueous adhesive composition comprising an admixture of:
(a) an aqueous suspension of solid, tacky, elastomeric, infusible, polymeric microspheres which has been concentrated by removal of a portion of the surfactants and/or suspension stabilisers contained in the suspension in an amount to limit the adhesion-reducing effect thereof on the final composition, and
(b) an acrylic latex pressure sensitive adhesive, the ratio, on a solids basis, of said microspheres to said latex being from 2.5 to 1 to 10 to 1,
said adhesive composition having a peel adhesion value of at least 200 grams per 1.9 cm after said adhesive composition has been applied to an adherent.

## Patentansprüche

1. Verfahren zur Herstellung einer wäßrigen Klebstoffzusammensetzung, umfassend die folgenden Schritte:
(a) Herstellen einer wäßrigen Suspension von festen, klebrigen, elastomeren, nicht schmelzbaren, polymeren Mikrokügelchen, wobei die Suspension Tenside und/oder Suspensionsstabilisatoren enthält, die bei der Herstellung der Mikrokügelchen verwendet werden;
(b) Entfernen von einem Teil der Tenside und/oder Suspensionsstabilistoren aus der wäßrigen Suspension, um den adhäsionsmindernden Effekt derselben auf die Klebstoffzusammensetzung zu begrenzen; und
(c) Vermischen der aus Schritt (b) resultierenden wäßrigen Suspension mit einem Acryllatex-Haftkleber, wobei das Verhältnis von Mikrokügelchen zu Latex bezogen auf den Feststoffgehalt 2,5:1 bis 10:1 beträgt.

2. Verfahren nach Anspruch 1, bei dem die wäßrige Suspension von Schritt (a) einen Gehalt an nichtflüchtigen Feststoffen von etwa 25 % besitzt.

3. Verfahren nach Anspruch 1, bei dem die Tenside und/oder suspensionsstabilisatoren dadurch entfernt werden, daß die wäßrige Suspension von Schritt (a) in eine erste Phase, welche die zu entfernenden Tenside und/oder Suspensionsstabilisatoren enthält, und eine zweite Phase getrennt wird.

4. Verfahren nach Anspruch 3, bei dem die zweite Phase ein Konzentrat aus Mikrokügelchen mit einem größeren Feststoffgehalt als die wäßrige Suspension von Schritt (a) enthält.

5. Verfahren nach Anspruch 4, bei dem etwa 65 % der Tenside und/oder Suspensionsstabilisatoren in der wäßrigen Suspension von Schritt (a) in Schritt (b) entfernt werden.

6. Verfahren nach Anspruch 1, bei dem die wäßrige Klebstoffzusammensetzung einen Gehalt an nichtflüchtigen Feststoffen von etwa 30 Gew.-% bis etwa 60 Gew.-% besitzt.

7. Verfahren nach Anspruch 1, bei dem die wäßrige Klebstoffzusammensetzung eine Haftfestigkeit von mindestens etwa 200 Gramm pro 1,9 cm besitzt.

8. Wäßrige Klebstoffzusammensetzung mit einer Beimischung von:
(a) einer wäßrigen Suspension von festen, klebrigen, elastomeren, nicht schmelzbaren, polymeren Mikrokügelchen, die konzentriert wurde durch Entfernen eines Teils der in der Suspension enthaltenen Tenside und/oder Suspensionsstabilisatoren in einer Menge, die den adhäsionsmindernden Effekt derselben auf die fertige Zusammensetzung begrenzt, und
(b) einem Acryllatex-Haftkleber, wobei das Verhältnis von Mikrokügelchen zu Latex bezogen auf den Feststoffgehalt 2,5:1 bis 10:1 beträgt,
wobei die Klebstoffzusammensetzung einen Haftfestigkeitswert von mindestens 200 Gram pro 1,9 cm besitzt, nachdem die Klebstoffzusammensetzung auf einen Haftgrund aufgetragen wurde.

## Revendications

1. Procédé de préparation d'une composition aqueuse d'adhésif, comprenant les étapes consistant à :
(a) former une suspension aqueuse de microsphères polymères infusibles, élastomères, collantes, solides, ladite suspension comprenant des tensioactifs et/ou des stabilisants de suspension utilisés dans la formation desdites microsphères ;
(b) enlever de ladite suspension aqueuse une partie des tensioactifs et/ou des stabilisants de suspension afin de limiter leur effet réducteur d'adhérence sur la composition d'adhésif ; et
(c) mélanger la suspension aqueuse provenant de l'étape (b) avec un adhésif sensible à la pression de type latex acrylique, le rapport, sur la base de l'extrait sec, desdites microsphères audit latex étant compris entre 2,5/1 et 10/1.

2. Procédé selon la revendication 1, dans lequel la suspension aqueuse de l'étape (a) a une teneur en extrait sec non volatil d'environ 25 %.

3. Procédé selon la revendication 1, dans lequel les tensioactifs et/ou les stabilisants de suspension sont éliminés par séparation de la suspension aqueuse de l'étape (a) en une première phase contenant les tensioactifs et/ou les stabilisants de suspension devant être éliminés et une deuxième phase.

4. Procédé selon la revendication 3, dans lequel la deuxième phase comprend un concentré de microsphères ayant une teneur en extrait sec supérieure à celle de la suspension aqueuse de l'étape (a).

5. Procédé selon la revendication 4, dans lequel environ 65 % des tensioactifs et/ou des stabilisants de suspension dans la suspension aqueuse de l'étape (a) sont éliminés au cours de l'étape (b).

6. Procédé selon la revendication 1, dans lequel la composition aqueuse d'adhésif a une teneur en extrait sec non-volatile comprise entre environ 30 % et environ 60 % en poids.

7. Procédé selon la revendication 1, dans lequel la composition aqueuse d'adhésif a une adhérence au pelage d'au moins environ 200 g pour 1,9 cm.

8. Composition aqueuse d'adhésif comprenant un mélange :
(a) d'une suspension aqueuse de microsphères polymères infusibles, élastomères, collantes, solides, qui a été concentrée par élimination d'une partie des tensioactifs et/ou des stabilisants de suspension contenus dans la suspension en une quantité limitant leur effet réducteur d'adhérence sur la composition finale, et
(b) d'un adhésif sensible à la pression de type latex acrylique, le rapport, sur la base de l'extrait sec, desdites microsphères audit latex étant compris entre 2,5/1 et 10/1,
ladite composition d'adhésif ayant un indice d'adhérence au pelage d'au moins 200 g pour 1,9 cm après que ladite composition d'adhésif a été appliquée sur un support d'adhérence.
